# DEMANDE DE BREVET EUROPEEN

(11) **EP 1 666 782 A1**
(43) Date de publication de la demande: **07.06.2006**
(21) Numéro de dépôt: 05292204.4
(22) Date de dépôt: 20.10.2005
(51) Int. Cl.: F16L 11/112

(54) **Soufflet de découplage, en particulier pour un système d'admission d'air dans un moteur à turbocompresseur**

(30) Priorité: 01.12.2004 FR 0412744
(71) Demandeur: HUTCHINSON, 75008 Paris (FR)
(72) Inventeur: Blin, Philippe, 37260 Monts (FR); Ciolczyk, Jean-Pierre, 45200 Montargis (FR); Zannelli, Carole, 45200 Montargis (FR); Tavin, Gérard, 45200 Montargis (FR)
(74) Mandataire: Doireau, Marc

(57) **Abrégé**

Soufflet de découplage, en particulier pour un système d'admission d'air dans un moteur à turbo-compresseur d'un véhicule automobile, ce soufflet (30) présentant des ondulations (36) et incorporant une structure (40) de renfort textile, caractérisé en ce que les ondulations (36) présentent un rayon de courbure (R_{c2}), dont le centre (O₂) est situé à l'intérieur du cylindre (C) formé par le fond des ondulations (36) du soufflet, de sorte que la longueur du soufflet diminue lorsqu'il est mis sous pression.

## Description

L'invention concerne un soufflet de découplage, en particulier pour un système d'admission d'air dans un moteur à turbo-compresseur d'un véhicule automobile ou d'un véhicule poids lourd.

Un soufflet selon l'art antérieur est généralement une pièce tubulaire multicouche présentant deux parties d'extrémité de raccordement et une partie centrale ondulée, et comprenant au moins une couche interne étanche et résistant à l'agressivité du fluide transporté qui est de l'air chargé d'huile, une structure intermédiaire de renfort textile et une couche externe résistant à l'environnement extérieur dans lequel se situe le soufflet, un tel soufflet étant généralement fabriqué en utilisant une technique de confection.

D'une manière générale, les constructeurs automobiles imposent notamment que ces soufflets puissent supporter l'ensemble des débattements du moteur dans trois directions, ce qui est obtenu par la présence des ondulations dans la partie centrale des soufflets qui vont travailler en traction/compression/cisaillement et se déformer en conséquence en entraînant également la transmission d'efforts. Or, un soufflet est une pièce qui est montée entre un élément du système d'admission d'air du moteur turbo-compressé et la caisse du véhicule, et l'expérience montre que la transmission d'efforts à la caisse du véhicule peut se traduire par l'apparition de phénomènes acoustiques perceptibles à l'intérieur de l'habitacle du véhicule et donc nuisibles au confort des passagers.

Par ailleurs, il est souhaitable que le soufflet ne subisse pratiquement pas de flambage sous pression, un tel flambage pouvant l'amener au contact d'une pièce du moteur qui peut être susceptible de l'endommager.

Enfin, les soufflets de découplage selon l'art antérieur présentent également des anneaux métalliques ou plastiques rigides de maintien qui sont disposés dans le creux des ondulations, ces anneaux évitant notamment l'expansion radiale du soufflet sous l'action de la pression du fluide.

Un but de l'invention est de concevoir un soufflet de découplage de conception nouvelle présentant notamment une structure apte à limiter au maximum la transmission des efforts engendrés par les déformations du soufflet et de la pression, et à éviter le flambage sous pression dudit soufflet.

A cet effet, l'invention propose un soufflet de découplage, en particulier pour un système d'admission d'air dans un moteur à turbo-compresseur d'un véhicule automobile, ce soufflet présentant des ondulations et incorporant une structure de renfort textile, qui est caractérisé en ce que les ondulations présentent un rayon de courbure dont le centre est situé à l'intérieur du cylindre formé par le fond des ondulations du soufflet, de sorte que la longueur du soufflet diminue lorsqu'il est mis sous pression.

D'une manière générale, la structure de renfort textile présente une alternance de parties ayant des rigidités différentes, les parties les plus rigides supprimant la présence d'anneaux rigides rapportés dans le creux des ondulations du soufflet, celles-ci contribuant à la limitation des efforts transmis par le soufflet et à son flambage lorsqu'il est mis sous pression.

Avantageusement, la structure de renfort textile comprend au moins une nappe de fils croisés qui est déposée sur une couche du soufflet suivant un angle de pose inférieur à 45° par rapport à l'axe longitudinal du soufflet, cet angle pouvant être de l'ordre de 20°.

En variante, la structure de renfort textile peut être un tricot de type "jersey".

Les parties les plus rigides de la structure textile sont constituées par une boucle d'un ou plusieurs fils textiles formant un noeud élastique dans le creux des ondulations du soufflet.

En variante, les parties les plus rigides de la structure de renfort textile peuvent être constitués par des renforts radiaux élastiques en matière plastique ou en caoutchouc rapportés dans le creux des ondulations du soufflet et qui, sous l'effet de la pression, vont varier en diamètre et contribuer ainsi à la variation des raideurs du soufflet.

D'une manière générale, la structure de renfort textile peut former soit une couche intermédiaire soit la couche externe du soufflet.

L'invention concerne également un système d'admission d'air, en particulier dans un moteur à turbo-compresseur de véhicule automobile, qui est caractérisé en ce qu'il est relié à la caisse du véhicule par au moins un soufflet de découplage tel que défini précédemment.

D'autres avantages, caractéristiques et détails de l'invention ressortiront du complément de description qui va suivre en référence à des dessins annexés, donnés uniquement à titre d'exemple et dans lesquels :
- la figure 1 est une vue schématique d'un système d'admission d'air dans un moteur à turbo-compresseur et comprenant notamment un échangeur air/air entre la sortie turbo et l'entrée du collecteur d'admission d'air du moteur ;
- la figure 2 est une vue en coupe axiale d'un soufflet de découplage selon l'art antérieur qui est monté en entrée ou en sortie de l'échangeur air/air de la figure 1 ;
- la figure 3 est une vue en perspective d'un soufflet de découplage selon l'invention ;
- les figures 4a et 4b illustrent respectivement la forme d'une ondulation d'un soufflet selon l'art antérieur et selon l'invention ;
- la figure 5 est une vue à plat schématique pour illustrer un exemple de réalisation d'une structure de renfort textile d'un soufflet selon l'invention ;
- la figure 6 est une demi-vue en coupe axiale d'un premier mode de réalisation d'un soufflet selon l'invention ; et
- la figure 7 est une demi-vue en coupe axiale d'un second mode de réalisation d'un soufflet selon l'invention.

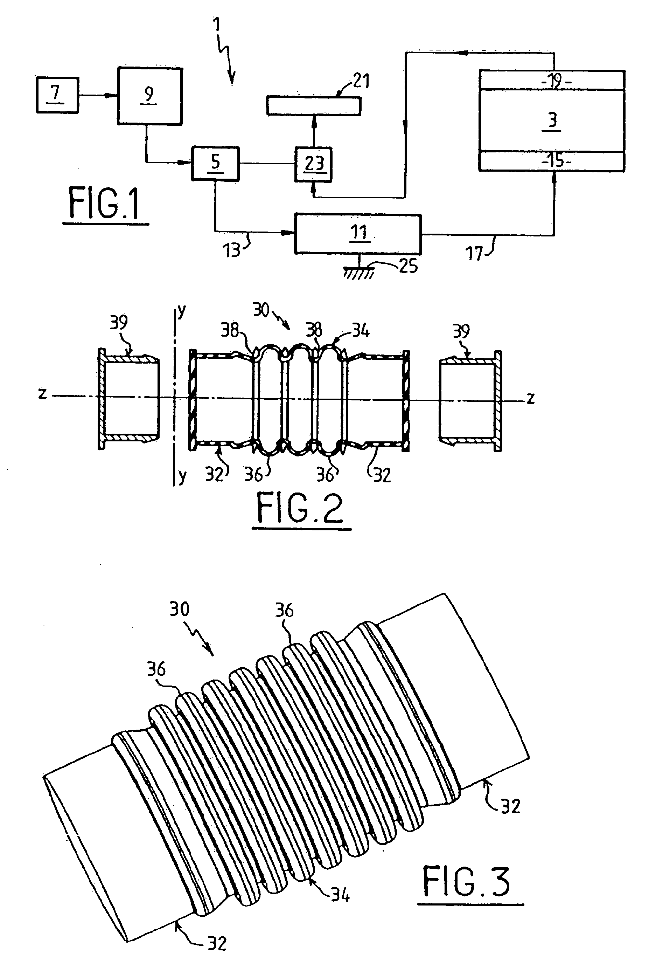

Un système d'admission d'air 1, connu en soi, pour un moteur 3 à turbo-compresseur 5 est schématiquement illustré à la figure 1. Ce système d'admission d'air 1 comprend notamment une prise d'air 7 reliée à l'entrée d'un filtre à air 9 dont la sortie est connectée à l'entrée du turbo-compresseur 5, un échangeur de chaleur air/air 11 dont l'entrée est reliée à la sortie du turbo-compresseur 5 par une tubulure d'entrée de raccordement 13 et dont la sortie est reliée au collecteur d'admission d'air 15 du moteur 3 par une tubulure de sortie de raccordement 17. Le collecteur d'échappement 19 du moteur 3 est relié au conduit d'échappement 21 avec une boîte de raccordement 23 pour prélever une partie des gaz d'échappement nécessaire à l'alimentation du turbo-compresseur 5.

Les tubulures de raccordement 13 et 17 situées de part et d'autre de l'échangeur de chaleur air/air 11 sont généralement constitués par des tubulures métalliques avec la présence de moyens de découplage tels que des soufflets qui peuvent être respectivement montés à l'entrée et à la sortie de l'échangeur air/air 11 qui est une pièce fixée à la caisse 25 du véhicule.

Un soufflet de découplage 30 selon l'art antérieur illustré à la figure 2 comprend deux parties d'extrémité de raccordement 32 et une partie centrale 34 présentant des ondulations 36 avec la présence d'anneaux métalliques de maintien 38 situés dans les creux des ondulations 36. Pour le raccordement du soufflet 30, on prévoit deux embouts métalliques 39 qui sont respectivement engagés dans les deux parties d'extrémité 32 du soufflet 30 et fixés par des colliers de serrage non représentés. Comme indiqué en préambule, ce soufflet de découplage comprend généralement au moins une couche interne résistant au fluide transporté, une couche intermédiaire de renfort textile et une couche externe de protection.

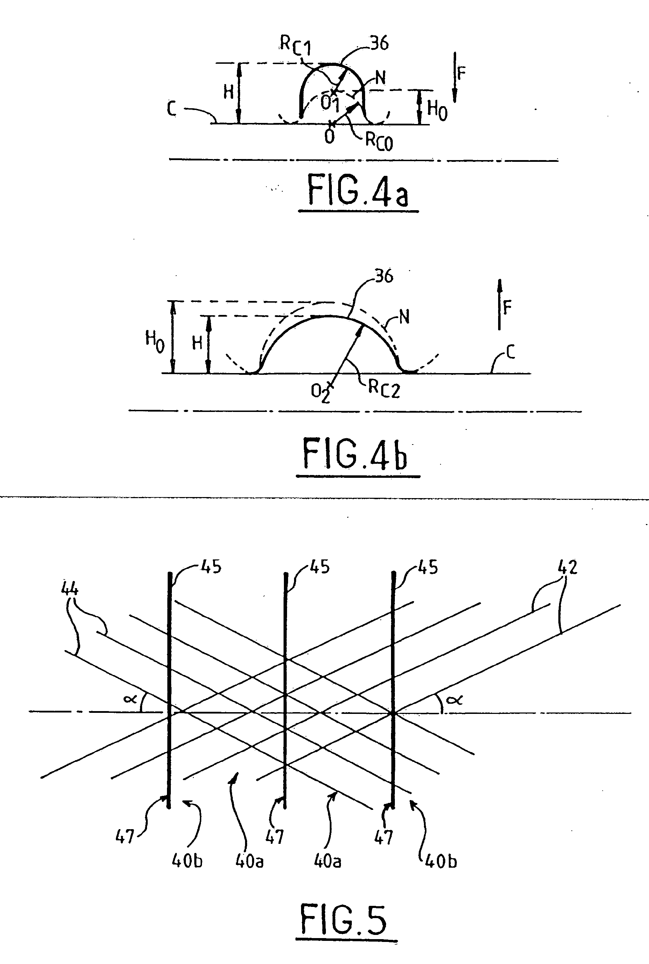

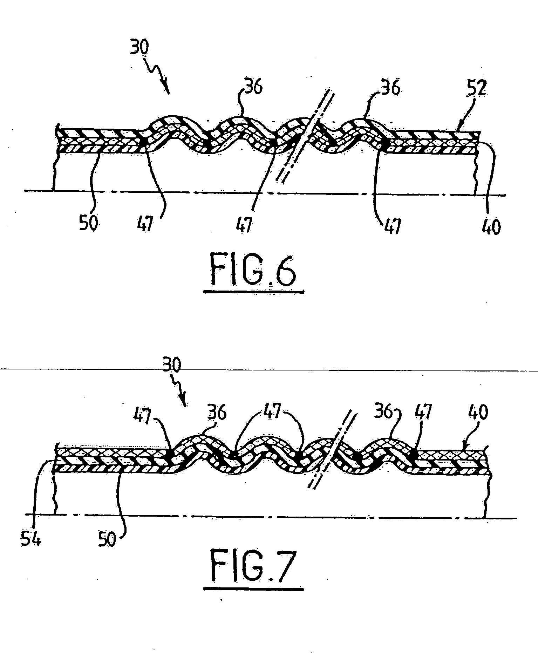

Un soufflet de découplage 30 selon l'invention est illustré à la figure 3 et il présente également deux parties d'extrémité 32 et une partie centrale ondulée 34 avec des ondulations 36 dont la forme va être explicitée en référence aux figures 4a et 4b. La figure 4a représente une ondulation 36 pour un soufflet de découplage 30 selon l'art antérieur qui se caractérise par un faible rayon de courbure R_{c1} dont le centre 0₁ est situé à l'extérieur du conduit cylindrique C délimité par le fond des ondulations. Cette ondulation 36 présente une hauteur H qui est supérieure à la hauteur Hₒ de la fibre neutre N représentée en traits pointillés et dont le centre O du rayon de courbure R_{co} est globalement situé sur le cylindre C formé par le fond des ondulations. Ainsi, lorsque le soufflet 30 est mis sous pression, les ondulations 36 vont se déformer pour tendre vers la forme de la fibre neutre N, c'est-à-dire que le diamètre des ondulations va diminuer suivant la direction de la flèche F, ce qui va se traduire par une augmentation de la longueur du soufflet et donc une augmentation des efforts transmis à la caisse du véhicule. Par contre, la figure 4b représente une ondulation 36 selon le soufflet de l'invention qui se caractérise par un grand rayon de courbure R_{c2} dont le centre 0₂ est situé à l'intérieur du conduit cylindrique C délimité par le fond des ondulations. Cette ondulation 36 présente la même hauteur H que celle de la figure 4a, mais elle est inférieure à la hauteur Hₒ de la fibre neutre N. Ainsi, lorsque le soufflet 30 est mis sous pression, les ondulations 36 vont se déformer pour tendre vers la forme de la fibre neutre N, c'est-à-dire que le diamètre des ondulations va augmenter suivant la direction de la flèche F, ce qui va se traduire par une diminution de la longueur du soufflet et donc une diminution des efforts transmis à la caisse du véhicule.
Par ailleurs, le soufflet 30 incorpore une structure textile 40 d'un type particulier qui, en combinaison avec la forme des ondulations 36, permet une diminution des efforts qu'il transmet et d'éviter un flambage du soufflet sous pression. Comme illustré sur la figure 5, la structure textile 40 peut être constituée par un tissu composé de deux séries de fils 42 et 44 sensiblement à 90° les uns des autres mais qui est déposé, selon l'axe longitudinal X-X du soufflet, suivant un angle de pose ∝ inférieur à 45° pour permettre la déformation des ondulations 36. Cet angle ∝ peut être de l'ordre de 20° par exemple. La structure textile 40 présente une alternance de parties 40a et 40b ayant des rigidités différentes, les parties les plus rigides 40b situées dans le creux des ondulations 36 permettant de supprimer la présence des anneaux rigides selon l'art antérieur. Ces parties les plus rigides 40b sont constitués par des boucles d'un ou plusieurs fils 45 qui forment des noeuds élastiques 47 dans le creux des ondulations 36 et dans des plans perpendiculaires à l'axe longitudinal Z-Z du soufflet 30. En variante, la structure textile 40 peut être un tissu tricoté tubulaire ou enroulé de type "jersey" par exemple, et les parties les plus rigides 40b peuvent être constituées par renforts radiaux élastiques en matière plastique ou en caoutchouc qui sont rapportés dans le creux des ondulations au lieu d'être intégrés dans la structure textile 40, ces renforts radiaux pouvant former des anneaux par exemple. D'une manière générale, la structure textile 40 peut être constituée à partir de fils à base d'aramide, de polyester ou de "Nylon" par exemple. Ainsi, à partir d'une certaine pression, les parties les plus rigides 40b de la structure textile 40 vont subir une expansion radiale limitée et contribuer ainsi à la variation des raideurs du soufflet.

Selon un premier mode de réalisation illustré à la figure 6, le soufflet 30 présente au moins une couche interne 50 en fluoro-silicone par exemple en contact avec le fluide transporté, une couche intermédiaire constituée par la structure textile 40 précitée, et une couche externe de protection 52 en silicone par exemple.

Selon un second mode de réalisation illustré à la figure 7, le soufflet 30 présente au moins une couche interne 50 en fluoro-silicone par exemple, une couche intermédiaire 54 et une couche externe formée par la structure textile 40 précitée.

Dans ces deux modes de réalisation, la structure textile 40 peut former une ou plusieurs couches.

D'une manière générale, le soufflet 30 selon l'invention peut être fabriqué soit par une technique de confection, soit par une technique de moulage.

A titre d'exemple, les constructeurs automobiles imposent à l'heure actuelle des soufflets pour des systèmes d'admission d'air pour moteurs turbo-compressés qui doivent s'étendre sur une longueur de l'ordre de 160mm, doivent présenter un diamètre intérieur compris entre 42mm et 70mm, doivent fonctionner à une température d'utilisation comprise entre 50°C et 230°C, doivent travailler dans un environnement extérieur où la température peut atteindre une température de 200°C, avec un fluide constitué d'air chargé d'huile à une pression de 3 bars relatifs, et pouvoir supporter des débattements de ± 30mm selon l'axe X-X, de ± 10mm selon l'axe Y-Y et ± 20mm selon l'axe Z-Z.

Bien entendu, l'invention ne se limite pas uniquement à des soufflets de découplage utilisables dans des systèmes d'admission d'air pour moteurs à turbo-compresseurs, mais elle peut également être utilisée dans d'autres domaines, comme par exemple pour assurer un rattrapage de jeu entre deux éléments tubulaires ou dans tout circuit de fluide soumis à des découplages.

## Revendications

1. Soufflet de découplage, en particulier pour un système d'admission d'air dans un moteur à turbo-compresseur d'un véhicule automobile, ce soufflet (30) présentant des ondulations (36) et incorporant une structure (40) de renfort textile, **caractérisé en ce que** les ondulations (36) présentent un rayon de courbure (R_{c2}), dont le centre (O₂) est situé à l'intérieur du cylindre (C) formé par le fond des ondulations (36) du soufflet, de sorte que la longueur du soufflet diminue lorsqu'il est mis sous pression.

2. Soufflet de découplage selon la revendication 1, dans lequel la structure de renfort textile (40) présente une alternance de parties (40a, 40b) ayant des rigidités différentes, les parties les plus rigides (40b) supprimant la présence d'anneaux rigides rapportés dans le creux des ondulations du soufflet, celles-ci contribuant à la limitation des efforts transmis par le soufflet et à son flambage lorsqu'il est mis sous pression.

3. Soufflet de découplage selon la revendication 1 ou 2, dans lequel la structure de renfort textile (40) comprend au moins une nappe de fils croisés (42, 44) qui est déposée sur une couche du soufflet suivant un angle de pose (α) inférieur à 45° par rapport à l'axe longitudinal du soufflet.

4. Soufflet de découplage selon la revendication 3, dans lequel l'angle de pose (α) de la nappe de fils croisés (40a, 40b) est de l'ordre de 20° par rapport à l'axe longitudinal du soufflet.

5. Soufflet de découplage selon la revendication 1 ou 2, dans lequel la structure de renfort textile (40) est un tricot tubulaire ou enroulé de type "jersey".

6. Soufflet de découplage selon l'une des revendications 2 à 5, dans lequel les parties les plus rigides (40b) de la structure textile (40) sont constituées par des boucles d'un ou plusieurs fils textiles (45) formant des noeuds élastiques (47) dans le creux des ondulations (36) du soufflet.

7. Soufflet de découplage selon l'une des revendications 2 à 5, dans lequel les parties les plus rigides (40b) de la structure de renfort textile (40) sont constituées par des renforts radiaux élastiques en matière plastique ou en caoutchouc rapportés dans le creux des ondulations (36) du soufflet.

8. Soufflet de découplage selon l'une des revendications précédentes, dans lequel la structure de renfort textile (40) forme une couche intermédiaire du soufflet.

9. Soufflet de découplage selon l'une des revendications 1 à 7, dans lequel la structure de renfort textile (40) forme la couche externe du soufflet.

10. Soufflet de découplage selon la revendication 8 ou 9, dans lequel la structure de renfort textile (40) est déposée sur une ou plusieurs couches.

11. Système d'admission d'air, en particulier dans un moteur à turbo-compresseur de véhicule automobile, **caractérisé en ce qu'**il est relié à la caisse du véhicule par au moins un soufflet de découplage tel que défini par l'une des revendications 1 à 10.
